# FASCICULE DE BREVET EUROPEEN

(11) **EP 0 796 190 B1**
(45) Date de publication et mention de la délivrance du brevet: **29.03.2000**
(21) Numéro de dépôt: 95934204.9
(22) Date de dépôt: 12.10.1995
(51) Int. Cl.: B60T 13/563

(54) **SERVOMOTEUR PNEUMATIQUE D'ASSISTANCE AU FREINAGE**
PNEUMATISCHER BREMSKRAFTVERSTÄRKER
PNEUMATIC BRAKE SERVO

(30) Priorité: 09.12.1994 FR 9414811
(43) Date de publication de la demande: 24.09.1997
(73) Titulaire: Bosch Systemes de Freinage, 93700 Drancy (FR)
(72) Inventeur: GAUTIER, Jean, Pierre, F-93600 Aulnay-sous-Bois (FR); VERBO, Ulysse, F-93600 Aulnay-sous-Bois (FR)
(74) Mandataire: Bentz, Jean-Paul
(86) Numéro de dépôt international: FR9501330
(87) Numéro de publication internationale: WO9617759

(56) Documents cités:
- EP-A- 0 327 997
- EP-A- 0 395 461
- DE-A- 2 830 262
- DE-U- 9 005 629

## Description

La présente invention concerne les servomoteurs pneumatiques, du type de ceux qui sont utilisés pour fournir une assistance au freinage des véhicules automobiles.

De tels servomoteurs sont bien connus et couramment employés dans la technique automobile. Ils comportent de façon classique une enveloppe fixée par sa paroi arrière sur le tablier séparant le compartiment moteur de l'habitacle, de façon à pouvoir être actionnés par une pédale de frein située dans l'habitacle et à actionner le piston primaire d'un maître-cylindre situé dans le compartiment moteur et relié par un circuit hydraulique aux freins du véhicule, le maître-cylindre étant fixé sur la paroi avant de l'enveloppe du servomoteur.

L'enveloppe est séparée de façon étanche par une structure de paroi mobile en une chambre avant reliée en permanence à une source de basse pression, et une chambre arrière reliée sélectivement à la chambre avant ou à une source de haute pression par un moyen de valve à trois voies, actionnée par une tige de commande reliée à la pédale de frein, et qui est susceptible de s'appuyer, par l'intermédiaire de la face avant d'un plongeur, sur la face arrière d'une tige de poussée solidaire d'un disque de réaction et actionnant le piston primaire du maître-cylindre.

De façon à accroître l'effort d'assistance fourni par de tels servomoteurs, on a développé, comme par exemple dans le document EP-A-0 327 997, des servomoteurs doubles ou en tandem, constitués schématiquement de deux servomoteurs disposés en série. Ces servomoteurs tandem ont alors un encombrement relativement important, qui en limite l'utilisation à certains véhicules où la place disponible dans le compartiment moteur est suffisante.

Pour pallier à cet inconvénient, on a cherché à développer, par exemple dans le document DE-A-3 343 160, des servomoteurs comportant une chambre additionnelle, de volume réduit, de façon à augmenter l'effort d'assistance fourni par le servomoteur sans en accroître les dimensions extérieures de façon significative.

On connaît, par exemple du document EP-B-0 395 461, un servomoteur correspondant au préambule de la revendication principale, et dans lequel un boîtier auxiliaire est solidaire de la paroi mobile et fait saillie dans la chambre avant. Un piston auxiliaire divise intérieurement de façon étanche le boîtier auxiliaire en un volume avant et un volume arrière. Le piston auxiliaire est monté fixe par rapport à l'enveloppe, et le volume avant est relié en permanence avec la chambre arrière et le volume arrière est relié en permanence avec la chambre avant.

L'inconvénient de ces servomoteurs à chambre additionnelle réside dans le fait que, transmettant des efforts d'assistance accrus, ils sont soumis à des déformations d'autant plus importantes en direction axiale. Il s'ensuit donc que, lors de l'actionnement du servomoteur pour une action de freinage, la distance axiale entre les parois avant et arrière du servomoteur varie, ce qui résulte en un allongement de la course de la pédale de frein.

La présente invention a donc pour but de proposer un servomoteur comportant une chambre additionnelle, et dont la rigidité dans la direction axiale soit accrue, de façon à la course de la pédale de frein soit constante.

Dans ce but, selon la présente invention, le servomoteur du type rappelé ci-dessus comporte en outre au moins un élément de transmission de force de réaction engendrée par l'actionnement d'un maître-cylindre sur une bride de fixation de celui-ci à l'avant du servomoteur pneumatique, l'élément de transmission de force de réaction étant fixé sur la bride de fixation et traversant l'enveloppe de part en part parallèlement à l'axe de symétrie du servomoteur et solidaire des parois avant et arrière de l'enveloppe, et l'élément de transmission de force de réaction étant un tirant traversant de façon étanche la face avant du boîtier auxiliaire.

D'autres buts, caractéristiques et avantages de la présente invention ressortiront plus clairement de la description qui suit d'un exemple de réalisation donné à titre illustratif, en référence aux dessins annexés sur lesquels:
la Figure 1 est une vue de côté, en coupe longitudinale, d'un servomoteur pneumatique d'assistance au freinage, réalisé conformément à la présente invention, et
la Figure 2 est une vue de côté, en coupe longitudinale, d'un servomoteur pneumatique d'assistance au freinage, réalisé conformément à un second mode de réalisation de l'invention.

Les Figures représentent un servomoteur pneumatique d'assistance au freinage prévu pour être placé de façon habituelle entre la pédale de frein d'un véhicule et le maître-cylindre commandant le circuit de freinage hydraulique de ce véhicule. Par convention, on appelle "avant" du servomoteur la partie de ce dernier tournée vers le maître-cylindre et "arrière" du servomoteur la partie tournée vers la pédale de frein. Sur la Figure, l'avant est ainsi à gauche et l'arrière à droite.

Le servomoteur représenté sur les Figures comprend un enveloppe extérieure 10 en forme de coquille, présentant une symétrie de révolution autour d'un axe X-X'.

Une structure de paroi mobile 12 délimite de façon étanche à l'intérieur de l'enveloppe 10 une chambre avant 14, reliée en permanence par un clapet anti-retour 15 à une source de dépression et une chambre arrière 16. La paroi mobile 12 est associée à une membrane déroulante souple 18 en élastomère dont le bord périphérique intérieur est reçu de façon étanche grâce à un bourrelet intérieur dans un piston creux d'assistance 20 disposé selon l'axe X-X' du servomoteur, et dont le bord périphérique extérieur est fixé de façon étanche sur l'enveloppe extérieure 10.

Le piston creux 20 se prolonge vers l'arrière sous la forme d'une partie tubulaire 22 qui traverse de façon étanche la paroi arrière de l'enveloppe 10. Un ressort de compression 24 interposé entre le piston 20 et la paroi avant de l'enveloppe 10 maintient normalement le piston 20 dans la position arrière de repos illustrée sur la Figure, dans laquelle la chambre arrière 16 présente son volume minimal et la chambre avant 14 son volume maximal.

Dans la partie centrale de la paroi mobile située en avant de la partie tubulaire arrière 22, le piston 20 présente un alésage dans lequel est reçu en coulissement un plongeur 26. L'extrémité avant d'une tige de commande 28 du servomoteur, disposée également selon l'axe X-X', est montée rotulante dans un alésage borgne du plongeur 26, et son extrémité arrière, qui fait saillie à l'extérieur de la partie tubulaire 22, est commandée directement par la pédale de frein du véhicule (non représentée).

De façon connue, le plongeur 26 commande le fonctionnement d'une valve à trois voies 30, mettant sélectivement la chambre arrière 16 en communication avec la chambre avant 14 ou avec une source de haute pression, telle que par exemple l'atmosphère présente à l'arrière de la partie tubulaire 22.

Un boîtier auxiliaire annulaire 32 est solidaire de la paroi mobile 12 et fait saillie dans la chambre avant 14. Un piston auxiliaire annulaire 34 délimite de façon étanche à l'intérieur du boîtier 32 un volume avant 36 et un volume arrière 38. L'étanchéité est assurée par une membrane déroulante souple en élastomère 40, dont le bord périphérique extérieur est fixé de façon étanche sur le boîtier 32.

Conformément à la présente invention, il est prévu un élément de transmission de force de réaction entre la paroi avant 42 et la paroi arrière 44 de l'enveloppe 10 du servomoteur.

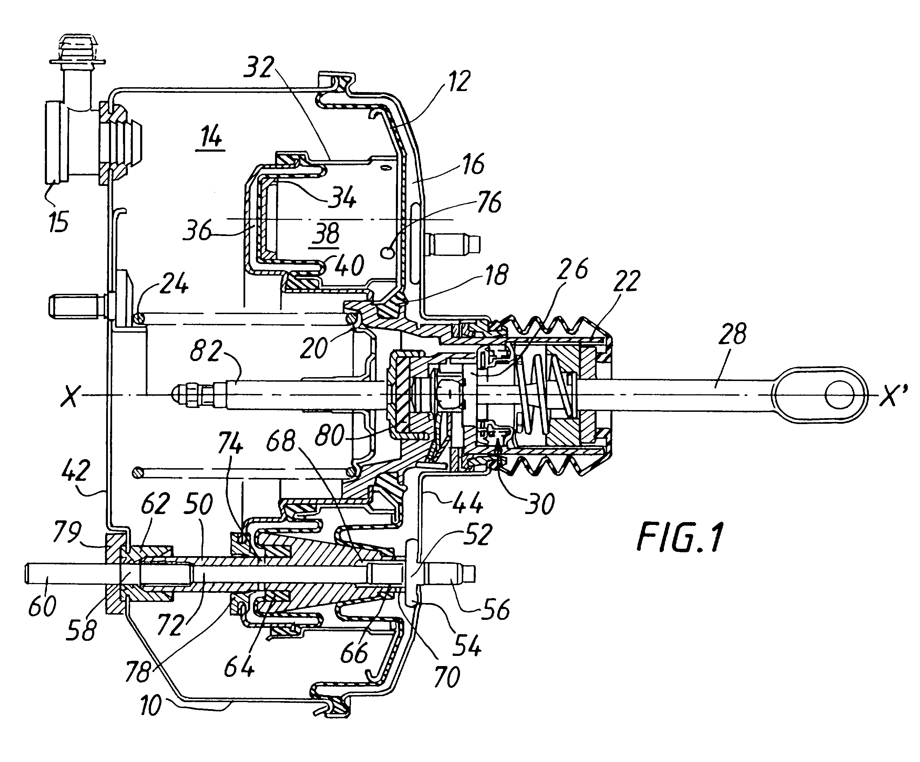

Selon le mode de réalisation de la Figure 1, cet élément de transmission de force est constitué d'un tirant, solidaire du piston auxiliaire annulaire 34, ou formé d'une seule pièce avec lui comme on l'a représenté.

De façon plus précise, le tirant 50 est constitué par exemple d'un tube, dont les deux extrémités sont taraudées. Dans l'extrémité arrière est vissée une première partie d'un goujon 52, formé avec un renflement médian 54 disposé à l'intérieur de l'enveloppe 10 et en butée sur la face interne de la paroi arrière 44, la deuxième partie 56 du goujon 52 traversant une ouverture de la paroi 44 dont les bords sont sertis sur le goujon. Un joint d'étanchéité pourra avantageusement être intercalé entre le renflement 54 et la paroi 44.

De même, la première partie d'un second goujon 58 est vissée dans l'extrémité avant du tirant 50, la deuxième partie 60 du goujon 58 traversant de façon étanche une ouverture de la paroi avant 42, par exemple à l'aide d'un bouchon tubulaire 62 en caoutchouc comme on l'a représenté. Le bouchon 62 est également appliqué de façon étanche sur le tirant 50.

Dans le piston 34, une gorge annulaire 64 est formée autour du tirant 50 pour recevoir de façon étanche un bourrelet de la membrane 40. De même, la membrane 18 de la structure de paroi mobile 12 est formée avec une ouverture dont les bords forment un bourrelet 66 fixé de façon étanche autour de l'extrémité arrière du tirant 50.

Des rainures axiales 68 sont formées dans le taraudage de l'extrémité arrière du tirant 50, sur une longueur supérieure à la longueur de la première partie du goujon 52, et des ouvertures radiales 70 sont pratiquées dans l'extrémité arrière du tirant 50, en arrière de la fixation du bourrelet 66, et débouchent dans les rainures 68, pour faire communiquer la chambre arrière 16 du servomoteur avec le volume 72 à l'intérieur du tirant tubulaire 50.

Des ouvertures radiales 74 sont également pratiquées dans le tirant tubulaire 50, en avant de la gorge 64 de fixation du bourrelet de la membrane 40, pour faire communiquer le volume 72 avec le volume avant 36 du boîtier auxiliaire 32. Des ouvertures 76 sont pratiquées dans la paroi du boîtier auxiliaire 32, pour faire communiquer la chambre avant 14 du servomoteur avec le volume arrière 38 du boîtier auxiliaire 32

Enfin, un joint d'étanchéité à lèvre 78 est disposé dans une ouverture formée à l'avant du boîtier auxiliaire 32, pour assurer une étanchéité coulissante entre ce boîtier et le tirant 50. Un écrou 79 pourra avantageusement être vissé sur la deuxième partie 60 du goujon 58, d'une part pour maintenir assemblées les deux parties 42 et 44 formant l'enveloppe 10 et ainsi faciliter la manutention et le stockage du servomoteur, et d'autre part pour déterminer de façon précise la distance axiale au repos entre les faces avant 42 et arrière 44 du servomoteur.

Le servomoteur ainsi assemblé est fixé sur le tablier (non représenté) séparant le compartiment moteur du véhicule de l'habitacle, au moyen d'un écrou vissé par l'habitacle sur la deuxième partie 56 du goujon 52 traversant une ouverture du tablier. Un maître-cylindre (non représenté) est fixé à l'avant du servomoteur au moyen d'un écrou vissé sur la deuxième partie 60 du goujon 58 traversant une ouverture formée dans une bride de fixation du maître-cylindre.

Lorsque l'ensemble du servomoteur est en position de repos, la tige de commande 28 ainsi que le plongeur 28 sont sollicités vers l'arrière, de sorte que la valve à trois voies établit normalement une communication entre les deux chambres 14 et 16 du servomoteur. Ces chambres communiquant en permanence respectivement avec les volumes 38 et 36 du boîtier auxiliaire 32, l'ensemble du servomoteur se trouve soumis à la pression fournie par la source de dépression par l'intermédiaire du clapet 15.

Lorsque le conducteur du véhicule appuie sur la pédale de frein, il en résulte un mouvement vers l'avant de la tige de commande 28 et du plongeur 26, qui commande le fonctionnement de la valve à trois voies 30. De l'air à la pression atmosphérique est alors admis dans la chambre arrière 16 et le volume avant 36. La différence de pression avec la chambre avant 14 et le volume arrière 38 respectivement, dans lesquels règne toujours la pression de la source de dépression, engendre une force d'assistance transmise par le piston creux sur un disque de réaction 80, recevant également la force d'actionnement sur la tige de commande 28 par l'intermédiaire du plongeur 26.

Le disque de réaction 80 est solidaire d'une tige de poussée 82, qui actionne le piston primaire du maître-cylindre, qui fait ainsi augmenter la pression hydraulique dans le circuit de freinage auquel il est relié. L'actionnement du maître-cylindre engendre une force de réaction sur la bride de fixation de celui-ci. Cette bride étant fixée sur le goujon 58, lui même solidaire du tirant 50, fixé par le goujon 52 sur le tablier du véhicule, la force de réaction créée par l'actionnement du maître-cylindre est ainsi transmise directement au tablier du véhicule par le tirant 50, sans être transmise par l'enveloppe 10 du servomoteur.

Il est donc possible de réaliser l'enveloppe 10 du servomoteur en un matériau plus fin ou plus léger, puisque cette enveloppe n'est soumise qu'à la seule contrainte engendrée par la pression différentielle entre son volume intérieur et l'atmosphère extérieure.

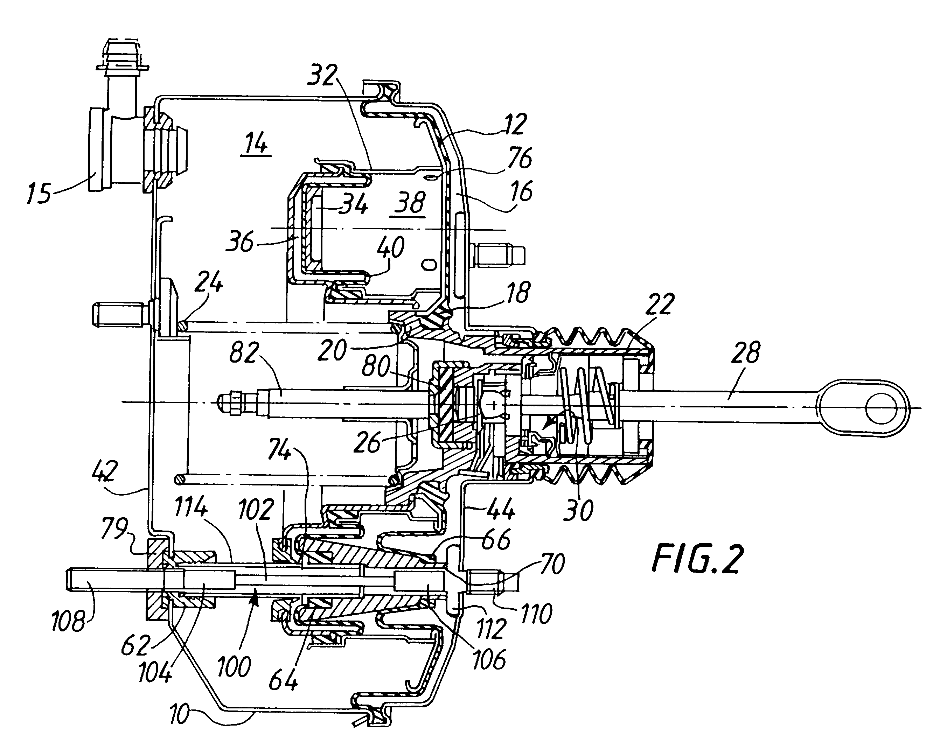

On a représenté sur la Figure 2 une variante du mode de réalisation qui vient d'être décrit. Sur la Figure 2, les mêmes éléments que ceux de la Figure 1 sont affectés des mêmes signes de référence, et ils ne seront pas décrits à nouveau en détail. Selon cette variante, le tirant est compressible suivant la direction axiale, de façon à pouvoir transmettre la force de réaction du maître-cylindre au tablier, sans transmettre d'efforts sur ce tablier en cas de collision du véhicule, et ainsi accroître la sécurité passive du véhicule équipé d'un tel servomoteur.

Le tirant 100 représenté sur la Figure 2 est constitué d'un câble 102 aux extrémités duquel sont serties des pièces terminales 104 et 106. Chaque pièce 104 et 106 est pourvue, à son extrémité, d'une partie filetée 108 et 110 respectivement, traversant une ouverture de la paroi 42 et 44. La pièce terminale 106 est formée avec un renflement médian 112, disposé à l'intérieur de l'enveloppe 10 et en butée sur la face interne de la paroi arrière 44, le bord de l'ouverture dans la paroi 44 étant serti sur la pièce terminale 106. Un joint d'étanchéité pourra avantageusement être intercalé entre le renflement 112 et la paroi 44.

Le piston auxiliaire annulaire 34 est solidaire d'un tube 114, entourant le tirant 100, et traversant de façon étanche le boîtier auxiliaire 32, grâce à un joint à lèvre disposé dans une ouverture formée à l'avant de ce boîtier 32. Le tube 114 est pourvu d'ouvertures 74 et 70 comme dans le mode de réalisation précédent, pour faire communiquer la chambre arrière 16 du servomoteur avec le volume avant 36 du boîtier auxiliaire 32. De même, le bouchon tubulaire 62 assure l'étanchéité du passage de la pièce terminale 104 au travers de la paroi 42, et de l'intérieur du tube 114 par rapport à la chambre avant 14 du servomoteur.

Le tube 114 n'a pas d'autres fonctions que d'assurer l'étanchéité du passage du câble 102 au travers de la face avant du boîtier auxiliaire 32, et de faire communiquer la chambre arrière 16 du servomoteur avec le volume avant 36 du boîtier auxiliaire, la transmission de la force de réaction due à l'actionnement du maître-cylindre étant assurée par le câble 102 du tirant 100. Le tube 114 peut donc être réalisé en un matériau relativement léger, tel qu'une matière plastique.

Avec une telle disposition, lors d'une sollicitation en compression du servomoteur, due par exemple à une collision frontale du véhicule, le tube 114 peut se briser, de sorte qu'aucun effort vers l'arrière n'est transmis de la paroi avant 42 du servomoteur au tablier du véhicule. Les conséquences d'une collision sont donc réduites pour le conducteur du véhicule.

Bien entendu, l'invention n'est pas limitée aux modes de réalisation qui ont été décrits, mais elle est susceptible au contraire de recevoir de nombreuses modifications qui apparaîtront à l'homme du métier, sans sortir du cadre des revendications annexées. On pourra par exemple prévoir que le tirant compressible soit du type télescopique, et constitué par exemple de deux tubes enfilés l'un dans l'autre. Le tirant 50 de la Figure 1 peut ainsi être constitué de deux tubes, un tube arrière fixé à la paroi arrière 44 du servomoteur et solidaire du piston annulaire auxiliaire 34, et un tube avant fixé à la paroi avant 42 du servomoteur, le tube avant comportant un épaulement radial externe coopérant avec un épaulement radial interne du tube arrière pour assurer la transmission des forces de réaction, un joint d'étanchéité étant disposé entre les deux tubes pour isoler l'espace intérieur du tirant de la chambre avant du servomoteur, le tube avant étant susceptible de coulisser dans le tube arrière sous l'effet d'une sollicitation externe consécutive à une collision, de façon à éviter toute transmission de forces de la paroi avant du servomoteur vers le tablier du véhicule.

## Revendications

1. Servomoteur pneumatique d'assistance au freinage, comportant une enveloppe (10) possédant un axe de symétrie (X-X'), séparée de façon étanche par une structure de paroi mobile (12) en une chambre avant (14) reliée en permanence à une source de basse pression, et une chambre arrière (16) reliée sélectivement à la chambre avant (14) ou à une source de haute pression par un moyen de valve à trois voies (30) actionnée par une tige de commande (28) susceptible de s'appuyer, par l'intermédiaire de la face avant d'un plongeur (26), sur la face arrière d'une tige de poussée (82) solidaire d'un disque de réaction (80), un boîtier auxiliaire (32) étant solidaire de la paroi mobile (12) et faisant saillie dans la chambre avant (14), un piston auxiliaire (34) divisant intérieurement de façon étanche le boîtier auxiliaire (32) en un volume avant (36) et un volume arrière (38), le piston auxiliaire (34) étant monté fixe par rapport à l'enveloppe (10), le volume avant (36) étant relié en permanence avec la chambre arrière (16) et le volume arrière (38) étant relié en permanence avec la chambre avant (14), caractérisé en ce qu'il comporte en outre au moins un élément de transmission de force de réaction (50,100) engendrée par l'actionnement d'un maître-cylindre sur une bride de fixation de celui-ci à l'avant du servomoteur pneumatique, l'élément de transmission de force de réaction (50,100) étant fixé sur la bride de fixation et traversant l'enveloppe (10) de part en part parallèlement à l'axe de symétrie (X-X') du servomoteur et solidaire des parois avant (42) et arrière (44) de l'enveloppe (10), et l'élément de transmission de force de réaction étant un tirant (50, 100) traversant de façon étanche la face avant du boîtier auxiliaire (32).

2. Servomoteur pneumatique selon la revendication 1, caractérisé en ce que le tirant (50) est solidaire du piston auxiliaire (34).

3. Servomoteur pneumatique selon la revendication 2, caractérisé en ce que le tirant (50) est tubulaire sur au moins une partie de sa longueur, et comporte au moins une première ouverture (70) faisant communiquer l'espace intérieur (72) du tirant (50) avec la chambre arrière (16) et au moins une seconde ouverture (74) faisant communiquer l'espace intérieur (72) du tirant (50) avec le volume avant (36).

4. Servomoteur pneumatique selon la revendication 1, caractérisé en ce que le tirant (100) est compressible suivant la direction axiale (X-X').

5. Servomoteur pneumatique selon la revendication 4, caractérisé en ce que le tirant compressible (100) comporte sur au moins une partie de sa longueur un câble (102).

6. Servomoteur pneumatique selon la revendication 5, caractérisé en ce que le câble (102) est disposé à l'intérieur d'un tube (114) traversant de façon étanche la face avant du boîtier auxiliaire (32).

7. Servomoteur pneumatique selon la revendication 4, caractérisé en ce que le tirant compressible comprend au moins deux tubes enfilés l'un dans l'autre pour constituer un tirant télescopique.

## Patentansprüche

1. Pneumatischer Servomotor zur Bremsunterstützung, mit einem Gehäuse (10), das eine Symmetrieachse (X-X') besitzt und in dichter Weise durch zumindest eine bewegliche Wandstruktur (12) in eine permanent mit einer Unterdruckquelle verbundene vordere Kammer (14) und eine hintere Kammer (16) unterteilt ist, die selektiv mit der vorderen Kammer (14) oder einer Hochdruckquelle mittels eines Dreiwegeventils (30) verbunden ist, das von einer Steuerstange (28) betätigt wird, welche in der Lage ist, sich über die Vorderseite eines Tauchkolbens (26) an der Hinterseite einer fest mit einer Reaktionsscheibe (80) verbundenen Schubstange (82) abzustützen, wobei ein Nebengehäuse (32) fest mit der beweglichen Wand (12) verbunden ist und in die vordere Kammer (14) hineinragt, wobei ein Nebenkolben (34) das Nebengehäuse (32) innen in dichter Weise in einen vorderen Raum (36) und einen hinteren Raum (38) unterteilt, wobei der Nebenkolben (34) bezüglich des Gehäuses (10) fest angeordnet ist, wobei der vordere Raum (36) permanent mit der hinteren Kammer (16) und der hintere Raum (38) permanent mit der vorderen Kammer (14) verbunden ist, dadurch gekennzeichnet, daß er ferner zumindest ein Glied (50, 100) zur Übertragung der Reaktionskraft enthält, die durch die Betätigung eines Hauptzylinders an einem Befestigungsflansch des letztgenannten vor dem pneumatischen Servomotor erzeugt wird, wobei das Glied (50, 100) zur Übertragung der Reaktionskraft am Befestigungsflansch befestigt ist und das Gehäuse (10) von einer Seite zur anderen parallel zur Symmetrieachse (X-X') des Servomotors durchdringt und fest mit der vorderen (42) und der hinteren Wandung (44) des Gehäuses (10) verbunden ist, und wobei das Glied zur Übertragung der Reaktionskraft ein Zugglied (50, 100) ist, das in dichter Weise die Vorderseite des Nebengehäuses (32) durchdringt.

2. Pneumatischer Servomotor nach Anspruch 1, dadurch gekennzeichnet, daß das Zugglied (50) fest mit dem Nebenkolben (34) verbunden ist.

3. Pneumatischer Servomotor nach Anspruch 2, dadurch gekennzeichnet, daß das Zugglied (50) zumindest über einen Teil seiner Länge rohrförmig ist und zumindest eine erste Öffnung (70), durch die der Innenraum (72) des Zugglieds (50) mit der hinteren Kammer (16) verbunden ist, und zumindest eine zweite Öffnung (74) aufweist, durch die der Innenraum (72) des Zugglieds (50) mit dem vorderen Raum (36) verbunden ist.

4. Pneumatischer Servomotor nach Anspruch 1, dadurch gekennzeichnet, daß das Zugglied (100) in axialer Richtung (X-X') zusammendrückbar ist.

5. Pneumatischer Servomotor nach Anspruch 4, dadurch gekennzeichnet, daß das zusammendrückbare Zugglied (100) zumindest über einen Teil seiner Länge ein Kabel (102) enthält.

6. Pneumatischer Servomotor nach Anspruch 5, dadurch gekennzeichnet, daß das Kabel (102) im Inneren eines Rohrs (114) angeordnet ist, das in dichter Weise die Vorderseite des Nebengehäuses (32) durchdringt.

7. Pneumatischer Servomotor nach Anspruch 4, dadurch gekennzeichnet, daß das zusammendrückbare Zugglied zumindest zwei ineinander gesteckte Rohre aufweist, um ein teleskopisches Zugglied zu bilden.

## Claims

1. Pneumatic brake booster, including a casing (10) having an axis of symmetry (X-X'), divided in leaktight fashion by a movable wall structure (12) into a front chamber (14) permanently connected to a source of low pressure, and a rear chamber (16) selectively connected to the front chamber (14) or to a source of high pressure by a three-way valve means (30), the valve being actuated by a control rod (28) capable of bearing, via the front face of a plunger (26), on the rear face of a push rod (82) integral with a reaction disk (80), an auxiliary housing (32) being integral with the movable wall (12) and projecting into the front chamber (14), an auxiliary piston (34) internally splitting the auxiliary housing (32) in leaktight fashion into a front volume (36) and a rear volume (38), the auxiliary piston (34) being mounted stationary relative to the casing (10), the front volume (36) being permanently connected to the rear chamber (16), and the rear volume (38) being permanently connected to the front chamber (14), characterized in that it further includes at least one element (50, 100) for transmitting a reaction force generated by the actuation of a master cylinder on a flange for fixing the master cylinder to the front of the pneumatic brake booster, the element for transmitting the reaction force (50,100) being fixed to the flange for fixing the master cylinder and passing right through the casing (10) parallel to the axis of symmetry (X-X') of the booster and integral with the front wall (42) and rear wall (44) of the casing (10), the element for transmitting a reaction force being a through-bolt (50,100) passing in leaktight fashion through the front face of the auxiliary housing (32).

2. Pneumatic booster according to Claim 1, characterized in that the through-bolt (50) is integral with the auxiliary piston (34).

3. Pneumatic booster according to Claim 2, characterized in that the through-bolt (50) is tubular over at least part of its length, and includes at least one first opening (70) causing the interior space (72) of the through-bolt (50) to communicate with the rear chamber (16), and at least one second opening (74) causing the internal space (72) of the through-bolt (50) to communicate with the front volume (36).

4. Pneumatic booster according to Claim 1, characterized in that the through-bolt (100) is compressible in the axial direction (X-X').

5. Pneumatic booster according to Claim 4, characterized in that the, compressible through-bolt (100) includes a cable (102) over at least part of its length.

6. Pneumatic booster according to Claim 5, characterized in that the cable (102) is located inside a tube (114) passing in leaktight fashion through the front wall of the auxiliary housing (32).

7. Pneumatic booster according to Claim 4, characterized in that the compressible through-bolt comprises at least two tubes slipped one inside the other in order to constitute a telescopic through-bolt.
